# EUROPEAN PATENT APPLICATION

(11) **EP 1 835 490 A2**
(43) Date of publication of application: **19.09.2007**
(21) Application number: 06253157.9
(22) Date of filing: 19.06.2006
(51) Int. Cl.: G11B 5/48

(54) **Magnetic head assembly, manufacturing method thereof, flexure, and magnetic disk apparatus**

(30) Priority: 13.03.2006 JP 2006068125
(71) Applicant: Fujitsu Ltd., Kawasaki-shi, Kanagawa 211-8588 (JP)
(72) Inventor: Ohwe, Takeshi, Fujitsu Limited, Kawasaki-shi, Kanagawa 211-8588 (JP)
(74) Representative: Hitching, Peter Matthew

(57) **Abstract**

A disclosed magnetic head assembly (20) is characterized by: a head slider (24); a flexure (23) for supporting the head slider (24); and a signal wiring portion (25) disposed on a surface of the flexure (23), the signal wiring portion (25) transmitting recording current signals or reproduction signals. The flexure (23) has a slider attachment portion (26) supported by the flexure on an end portion and capable of warping and a flexure terminal portion (29) disposed on the end portion relative to an attachment position of the head slider (24) on the slider attachment portion (26) and electrically connected to the signal wiring portion (25). The head slider (24) is fixed on a surface of the slider attachment portion (26) and has a slider terminal portion (32) disposed on a side surface on the end portion and electrically connected to an element portion (31). The slider terminal portion (32) is electrically connected to the flexure terminal portion (29) using a joint portion (40) and the flexure terminal portion (29) is disposed separably from the surface of the surface of the flexure (23).

## Description

### BACKGROUND OF THE INVENTION

### 1. Field of the Invention

The present invention generally relates to a magnetic head assembly, a manufacturing method thereof, a flexure, and a magnetic disk apparatus, especially to a magnetic head assembly having a signal wiring portion disposed on a surface of a support of a head slider, a manufacturing method thereof, a flexure, and a magnetic disk apparatus.

### 2. Description of the Related Art

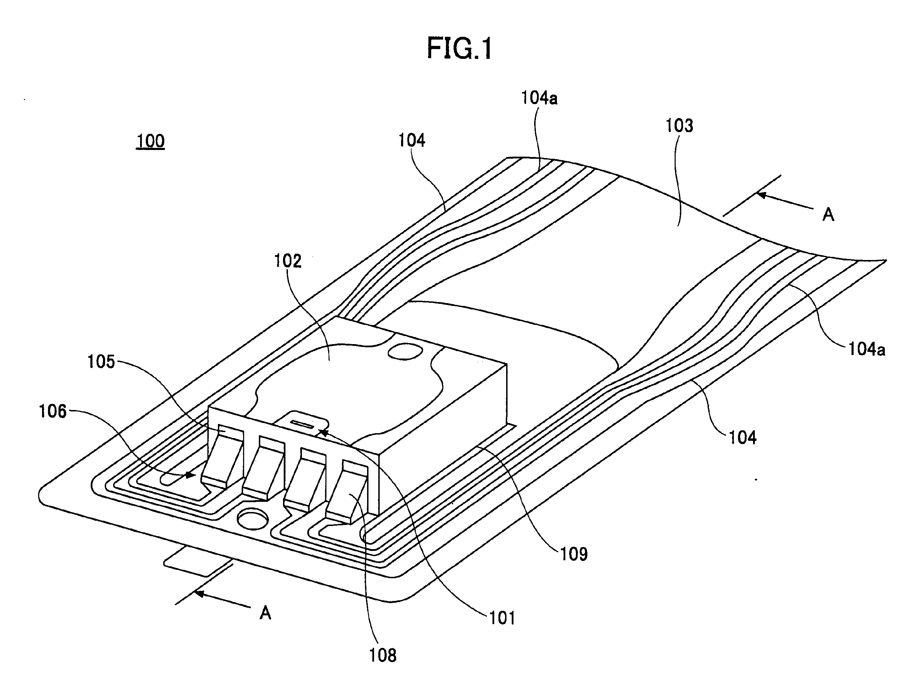

In recent years, miniaturization of magnetic head assemblies for performing recording/reproduction on a magnetic disk have made progress according as magnetic disk apparatuses have higher density and miniaturized sizes. As shown in FIG. 1, a magnetic head assembly 100 has a structure in which a head slider 102 having an element portion 101 performing recording/reproduction is supported by a leaf-spring flexure 103. A recording current supplied from a recording/reproduction amplifier (not shown in the drawings) to the element portion 101 and reproduction signals supplied from the element portion 101 to the recording/reproduction amplifier are transmitted to signal wiring 104 of the magnetic head assembly 100. The signal wiring 104 employs Cu wiring 104a formed on a surface of the flexure 103 instead of wiring so as to miniaturize the magnetic head assembly and simplify an assembly step thereof. The Cu wiring 104a is formed on the surface of the flexure 103 via an insulating layer 104b and the insulating layer 104b and the Cu wiring 104a are firmly attached on the surface of the flexure 103.

In order to connect the element portion 101 of the head slider 102 to the Cu wiring 104a, a head terminal 105 is disposed on the head slider 102 and a flexure terminal 106 is disposed on the Cu wiring 104a. Conventionally, the head terminal 105 and the flexure terminal 106 are electrically connected using gold ball bonding referred to as GBB (see Parent Document 1, for example). The gold ball bonding is a type of an ultrasonic welding method where the flexure 103 and the head slider 102 must be firmly fixed upon bonding in order to certainly propagate ultrasonic waves. Stress applied on this occasion may easily deform the flexure 103 and poses a problem in that a yield of the magnetic head assembly 100 is reduced. In order to solve this problem, junction techniques referred to as solder ball bonding (SSB), for example, have been introduced instead of the gold ball bonding, by which a solder ball is melted and solidified so as to form a junction portion 108 and the head terminal 105 and the flexure terminal 106 are electrically connected (refer to Parent Document 2 or 3, for example).

Parent Document 1: Japanese Laid-Open Patent Application No. 2005-276436

Parent Document 2: Japanese Laid-Open Patent Application No. 2005-123581

Parent Document 3: Japanese Laid-Open Patent Application No. 2005-81406

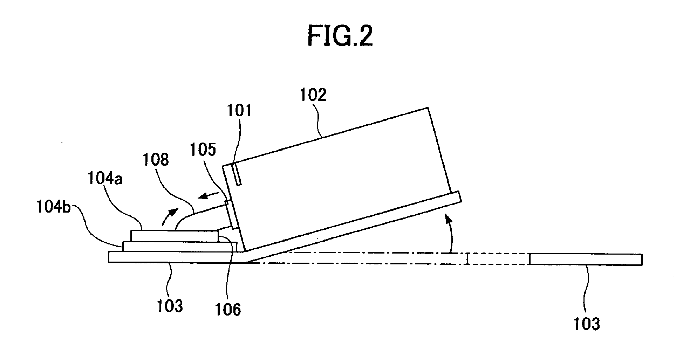

As shown in FIG. 2, a thin stainless steel plate is used for the flexure 103. Further, an attachment portion 109 of the head slider 102 has a cantilever structure, so that a flexure tip portion of the attachment portion 109 is connected to a body of the flexure 103 and both sides in a width direction and a base thereof are separated from the body of the flexure 103.

In the SSB, a solder ball is heated to a high temperature, namely, about 200 °C and melted so as to form the junction portion 108. The volume of solder is shrunk upon solidification and stress is generated such that the head terminal 105 and the flexure terminal 106 are brought close to each other. Thus, a connection portion between the attachment portion 109 of the head slider 102 and the body of the flexure 103 is deformed and raised relative to the body of the flexure 103. In accordance with this, a relative angle of the head slider 102 is changed with respect to the body of the flexure 103. This poses a problem in that levitation characteristics of the head slider 102 are deteriorated and levitation height thereof is changed, thereby reducing recording/reproduction characteristics or causing damage to a magnetic disk upon loading/unloading and reducing performance and reliability of a magnetic disk apparatus.

### SUMMARY OF THE INVENTION

It is a general object of the present invention to provide an improved and useful magnetic head assembly, a manufacturing method thereof, a flexure, and a magnetic disk apparatus using a magnetic head assembly in which the above-mentioned problems are eliminated.

A more specific object of the present invention is to provide a magnetic head assembly, a manufacturing method thereof, a flexure, and a magnetic disk apparatus using a magnetic head assembly that controls deformation of the flexure and has good levitation characteristics.

According to one aspect of the present invention, there is provided a magnetic head assembly comprising: a head slider having an element portion including a recording element or a reproduction element; a flexure for supporting the head slider; and a signal wiring portion disposed on a surface of the flexure, the signal wiring portion transmitting recording current signals or reproduction signals, wherein the flexure has a slider attachment portion supported by the flexure on an end portion and capable of warping and a flexure terminal portion disposed on the end portion side relative to an attachment position of the head slider on the slider attachment portion, the flexure terminal portion being electrically connected to the signal wiring portion, the head slider is fixed on a surface of the slider attachment portion and has a slider terminal portion disposed on a side surface on the end portion side, the slider terminal portion being electrically connected to the element portion, the slider terminal portion is electrically connected to the flexure terminal portion using a joint portion, and the flexure terminal portion is disposed separably from the surface of the flexure.

According to the present invention, when forming the joint portion for connecting the slider terminal portion of the head slider to the flexure terminal portion, stress is generated such that the slider terminal portion and the flexure terminal portion are brought close to each other due to the volume shrinkage of molten solder upon solidification. In accordance with this stress, the flexure terminal portion is separated from the surface of the flexure and absorbs the stress. Thus, the stress does not affect the flexure, especially the flexure attachment portion, and the warping of the flexure attachment portion is prevented. Therefore, the flexure attachment portion is held at a desired relative angle relative to the flexure, so that it is possible to provide a magnetic head assembly with good levitation characteristics.

According to another aspect of the present invention, there is provided a method of manufacturing a magnetic head assembly including: a head slider having an element portion including a recording element or a reproduction element; a flexure including a metallic plate and supporting the head slider; and a signal wiring portion disposed on a surface of the flexure, the signal wiring portion transmitting recording current signals or reproduction signals, wherein the flexure has a slider attachment portion supported by the flexure on an end portion and capable of warping and a flexure terminal portion disposed on the end portion side relative to an attachment position of the head slider on the slider attachment portion, the flexure terminal portion being electrically connected to the signal wiring portion, the head slider is fixed on a surface of the slider attachment portion and has a slider terminal portion disposed on a side surface on the end portion side, the slider terminal portion being electrically connected to the element portion, and the slider terminal portion is electrically connected to the flexure terminal portion using a joint portion, the method comprising the steps of: forming an insulating layer on an area where the signal wiring portion on a surface of the metallic plate is formed; forming a flexure terminal portion and a signal wiring layer on the insulating layer; forming, between the surface of the metallic plate and the insulation layer or between the insulating layer, the flexure terminal portion, and the signal wiring layer, a sacrifice layer on an area including an area where the flexure terminal portion is formed; and removing the sacrifice layer after the insulating layer or the signal wiring layer is formed on an upper side of the sacrifice layer.

According to the present invention, the sacrifice layer is formed between the surface of the metallic plate and the insulating layer, or in an area including an area where the flexure terminal portion is formed, between the insulating layer, the flexure terminal portion, and the signal wiring layer, thereby providing the aforementioned magnetic head assembly.

According to yet another aspect of the present invention, there is provided a magnetic disk apparatus comprising one of the magnetic head assemblies mentioned above, an actuator mechanism for supporting the magnetic head assembly, and a magnetic disk recorded and reproduced by the element portion of the magnetic head assembly.

According to the present invention, a magnetic head assembly having good levitation characteristics is included, so that it is possible to provide a magnetic disk apparatus with superior reliability.

According to the present invention, it is possible to provide a magnetic head assembly, a manufacturing method thereof, a flexure, and a magnetic disk apparatus using a magnetic head assembly that controls deformation of the flexure and has good levitation characteristics.

Other objects, features and advantage of the present invention will become more apparent from the following detailed description when read in conjunction with the accompanying drawings.

### BRIEF DESCRIPTION OF THE DRAWINGS

FIG. 1 is an enlarged view of main elements of a conventional magnetic head assembly;
FIG. 2 is a cross-sectional view taken along line A-A shown in FIG. 1;
FIG. 3 is a plan view of main elements of a magnetic disk apparatus according to a first embodiment of the present invention;
FIG. 4 is a perspective view of a magnetic head assembly in a first example according to the first embodiment when viewed from a surface side facing a medium;
FIG. 5 is an enlarged view of main elements of a magnetic head assembly in the first example shown in FIG. 4;
FIG. 6 is a cross-sectional view taken along line B-B shown in FIG. 5;
FIG. 7A is a (first) plan view showing a step of manufacturing a magnetic head assembly in the first example;
FIG. 7B is a cross-sectional view taken along line D-D shown in FIG. 7A;
FIG. 8A is a (second) plan view showing a step of manufacturing a magnetic head assembly in the first example;
FIG. 8B is a cross-sectional view taken along line D-D shown in FIG. 8A;
FIG. 9A is a (third) plan view showing a step of manufacturing a magnetic head assembly in the first example;
FIG. 9B is a cross-sectional view taken along line D-D shown in FIG. 9A;
FIG. 10A is a (fourth) plan view showing a step of manufacturing a magnetic head assembly in the first example;
FIG. 10B is a cross-sectional view taken along line D-D shown in FIG. 10A;
FIG. 11A is a (fifth) plan view showing a step of manufacturing a magnetic head assembly in the first example;
FIG. 11B is a cross-sectional view taken along line D-D shown in FIG. 11A;
FIG. 12 is a diagram showing other example of steps of manufacturing a magnetic head assembly in the first example;
FIG. 13 is a cross-sectional view of a magnetic head assembly in a second example;
FIG. 14 is a diagram showing steps of manufacturing a magnetic head assembly in the second example;
FIG. 15 is a plan view of main elements of a magnetic disk apparatus according to a second embodiment of the present invention;
FIG. 16 is a perspective view of a magnetic head assembly in a third example when viewed from a surface side facing a medium;
FIG. 17 is an enlarged view of main elements of a magnetic head assembly in the third example;
FIG. 18 is a cross-sectional view taken along line E-E shown in FIG. 17;
FIG. 19 is a diagram showing how a magnetic head assembly in the third example is brought into contact with a lamp;
FIG. 20 is an enlarged view of main elements of a magnetic head assembly in a fourth example;
FIG. 21 is a cross-sectional view taken along line F-F shown in FIG. 20; and
FIG. 22 is a diagram showing how a magnetic head assembly in the fourth example is brought into contact with a lamp.

### DESCRIPTION OF THE PREFERRED EMBODIMENTS

In the following, embodiments of the present invention will be described with reference to the accompanying drawings.

### [First embodiment]

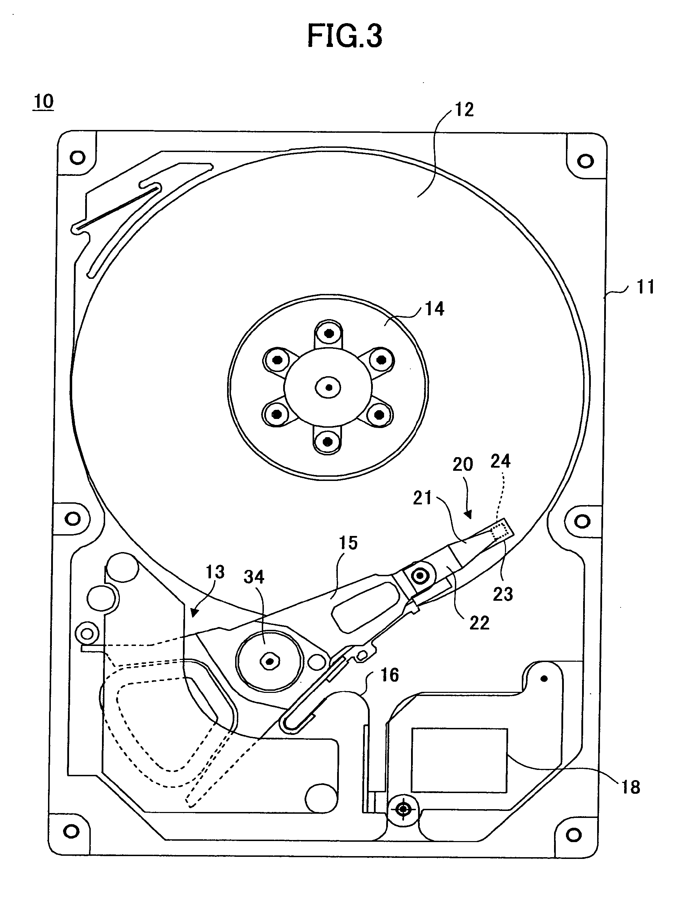

FIG. 3 is a plan view of main elements of a magnetic disk apparatus according to a first embodiment of the present invention.

With reference to FIG. 3, a magnetic disk apparatus 10 according to the first embodiment comprises a housing 11, a magnetic disk 12, a magnetic head assembly 20, an actuator portion 13, and the like contained in the housing 11. The magnetic disk 12 is fixed on a hub 14 and is driven by a spindle motor, which is not shown in the drawings. The magnetic head assembly 20 has a base fixed on an arm 15 and is rotated in a radial direction of the magnetic disk 12 by the actuator portion 13 via the arm 15.

The magnetic disk 12 is capable of employing what is called an in-plane magnetic recording medium or a vertical magnetic recording medium, for example. The magnetic disk 12 has a known structure and may be capable of recording and reproducing using the magnetic head assembly 20.

In the housing 11, there is disposed an R/W amplifier 18 for inputting/outputting a recording current and reproduction signals to the magnetic head assembly 20 via an FPC 16 (Flexible Print Circuit). The R/W amplifier 18 is connected to an electronic board (not shown in the drawings) disposed on a back side of the housing 11. The electronic board includes a recording/reproduction controlling circuit, a magnetic head position controlling circuit, a spindle motor controlling circuit, and the like (not shown in the drawings). In the following, the magnetic head assembly 20 will be described in detail.

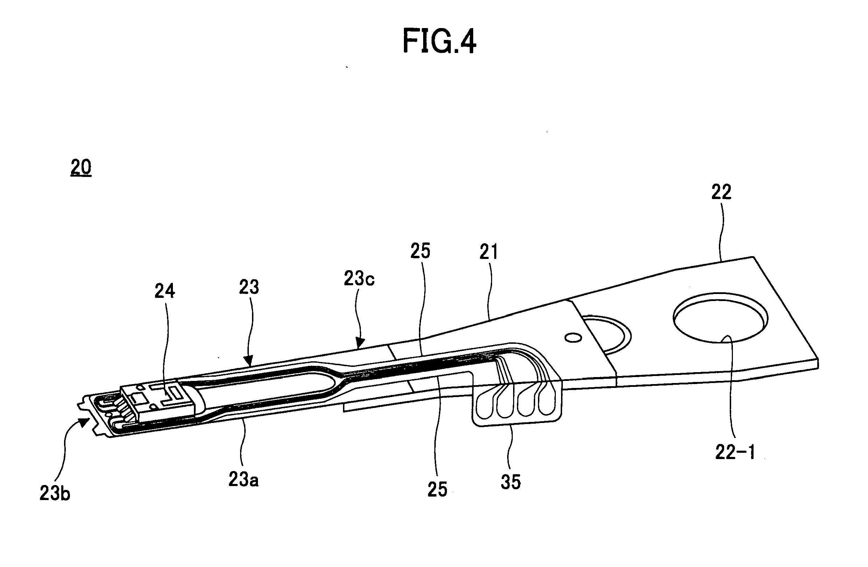

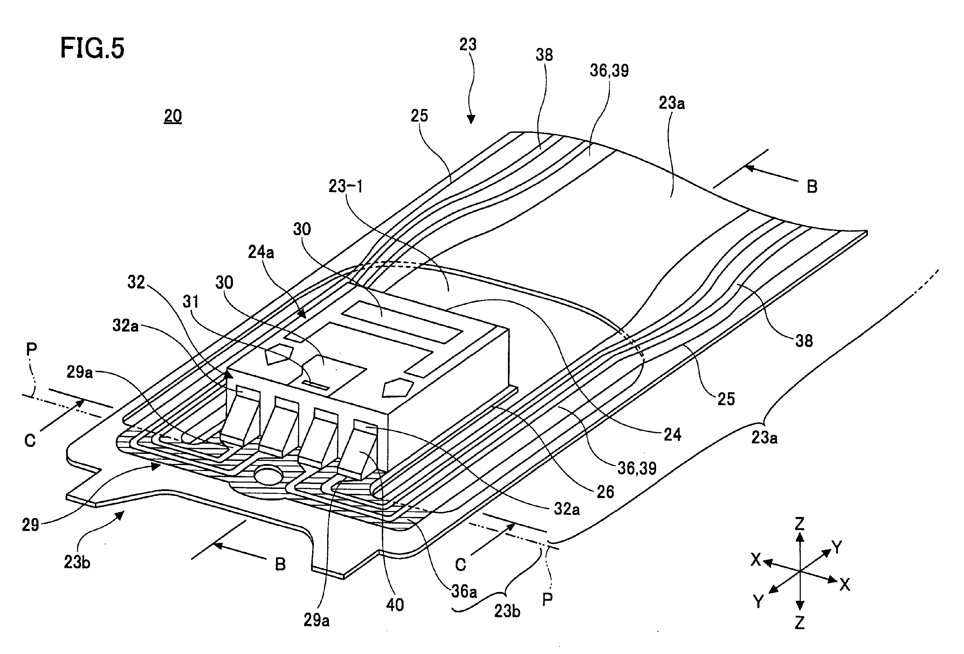

FIG. 4 is a perspective view of a magnetic head assembly in a first example according to the first embodiment when viewed from a surface side facing a medium. FIG. 5 is an enlarged view of main elements of the magnetic head assembly in the first example shown in FIG. 4, showing the vicinity of a head slider disposed on a tip portion of the magnetic head assembly.

With reference to FIGS. 4 and 5, the magnetic head assembly 20 comprises a load beam 21, base plate 22, a flexure 23, a head slider 24, a signal wiring portion 25, and the like.

A sheet metal including stainless steel and the like is used for the load beam 21. The load beam 21 has the base plate 22 on a base thereof by fitting, for example, in an integrated manner and is fixed on the arm 15 shown in FIG. 3 via an opening portion 22-1 of the base plate 22. Further, the load beam 21 has the flexure 23 fixed on a center portion to a tip portion thereof by fitting, for example, and supports the flexure 23.

The flexure 23 employs a sheet metal including stainless steel and the like and has a function of a leaf spring. In the flexure 23, a base 23c is fixed on the load beam 21 and a flexure tip portion 23b includes a free end with the fixed portion as a fulcrum.

A boundary between a flexure body portion 23a and the flexure tip portion 23b is represented by line P-P as shown in FIG. 5. The line P-P indicates a line that passes through a position, in an X axis direction, where a slider attachment portion 26 as will be described in the following is connected to the flexure tip portion 23b.

Also, the flexure 23 has the slider attachment portion 26 formed on the flexure tip portion 23b and the head slider 24 is bonded on the surface of the slider attachment portion 26.

The head slider 24 includes a pad 30 for receiving pressure from an air flow generated on a medium facing surface 24a in accordance with a rotation of a magnetic disk (not shown in the drawings) and an element portion 31 performing recording/reproduction on an air flow side.

The element portion 31 includes a recording element for converting recording current signals to a recording magnetic field and a reproduction element for detecting a signal magnetic field from a magnetic disk and converting to reproduction signals, the elements being not distinctively shown in the drawings due to minute sizes thereof. The head slider 24 has a slider terminal portion 32 disposed on a side surface of the flexure tip portion 23b. The slider terminal portion 32 is for supplying the recording current signals to the recording element and extracting the reproduction signals from the reproduction element. In this case, the slider terminal portion 32 has four pad electrodes 32a, for example.

The slider attachment portion 26 is connected to the flexure tip portion 23b. Both sides in X axis direction and a side relative to the base 23c in Y axis direction are separated from the flexure body portion 23a with an opening portion 23-1. In other words, the slider attachment portion 26 has a cantilever structure supported by the flexure tip portion 23b. The slider attachment portion 26 has such a structure, so that the flexure tip portion 23b of the slider attachment portion 26 is capable of deformation in accordance with levitation force generated in the head slider 24.

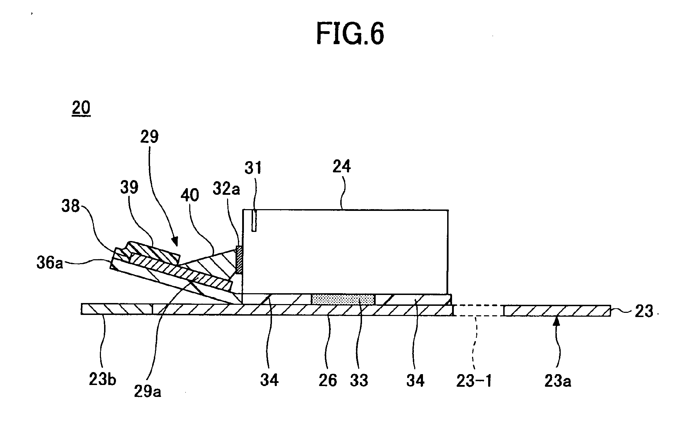

FIG. 6 is a cross-sectional view taken along line B-B shown in FIG. 5. In FIG. 6, a form of the medium facing surface of the head slider is omitted.

With reference to FIG. 6 along with FIGS. 4 and 5, the head slider 24 is fixed on the surface of the slider attachment portion 26 via a bonding layer 33. In addition, an insulating layer 34 is formed in close contact with a portion of the surface of the slider attachment portion 26 so as to secure a space filled with the bond.

On a surface of the flexure 23, the signal wiring portion 25 includes an insulating layer 36, a Cu wiring layer 38, and a protective film 39 in this order in a laminated manner. The insulating layer 36 of the signal wiring portion 25 may include resin having a thickness of 10 µm, for example. Examples of resin preferable for the insulating layer 36 include polyimide resin or polyester resin. The insulating layer 36 has almost an entire portion thereof firmly adhered to the surface of the flexure 23.

The Cu wiring layer 38 includes a Cu film having a thickness of 10 µm and a width of about 20 µm to 60 µm, for example. Although four signal wires and earthing wires are shown as an example of the Cu wiring layer 38, the layer is not limited to this example. In addition, the Cu wiring layer 38 may include a Cu alloy film or a metallic material with good conductivity besides the Cu film.

The protective film 39 includes resin having a thickness of 5 µm, for example, and the same material as selected in the insulating layer 36. The protective film 39 is formed such that it covers the Cu wiring layer 38 and substantially overlaps the insulating layer.

In the signal wiring portion 25, an HGA terminal portion 35 is disposed, including a pad electrode electrically connected to the Cu wiring layer 38 on the base of the magnetic head assembly 20. The HGA terminal portion 35 is connected to the FPC 16 shown in FIG. 3.

On the other hand, in the signal wiring portion 25, a flexure terminal portion 29 is disposed as a terminal on the head slider 24. The flexure terminal portion 29 is disposed on the flexure tip portion 23b relative to the attachment position of the head slider 24 of the slider attachment portion 26. The flexure terminal portion 29 includes an insulating layer 36a formed on the slider attachment portion 26 and the surface of the flexure tip portion 23b, a pad electrode 29a formed thereon, and the Cu wiring layer 38 connected to the pad electrode 29a. In this case, the flexure terminal portion 29 has four pad electrodes 29a, for example.

In magnetic head assembly 20 in the first example, the insulating layer 36a of the flexure terminal portion 29 is separated from the slider attachment portion 26 and the surface of the flexure tip portion 23b. The insulating layer 36a is a portion of the insulating layer 36 of the signal wiring portion 25 mentioned above and is shown in a hatching area of slant lines in FIG. 5. In other words, the insulating layer 36a includes the insulating layer 36 on the flexure tip portion 23b relative to the line P-P and the insulating layer 36 on the flexure tip portion 23b relative to the attachment position of the head slider 24.

A solder joint portion 40 electrically connects the pad electrode 29a of the flexure terminal portion 29 to the pad electrode 32a of the slider terminal portion 32. Materials for solder of the solder joint portion 40 are not particularly limited. Examples that may be used include an alloy in which Sn, Ag, Cu, Bi, Zn, In, and the like are added in a compound and unleaded solder having Sn-Ag-Cu (eutectic point is 218 °C, for example).

The volume of the solder is shrunk upon solidification from a liquid status and stress is generated between the slider terminal portion 32 and the flexure terminal portion 29 such that they are brought close to each other. The head slider 24 is firmly adhered to the slider attachment portion 26, so that the head slider 24 bears the stress from the solder joint portion 40 using an elastic force of the slider attachment portion 26.

On the other hand, the insulating layer 36a of the flexure terminal portion 29 is separated from the surface of the flexure 23 (the slider attachment portion 26 and the flexure tip portion 23b), so that the insulating layer 36a is readily capable of deformation such as being raised in accordance with the stress from the solder joint portion 40. Thus, the insulating layer 36a is separated from the surface of the flexure 23 and absorbs the stress of the solder joint portion 40. Accordingly, warping of the slider attachment portion 26 can be prevented and a relative angle of the slider attachment portion 26 relative to the flexure body portion 23a is not changed, thereby preventing negative effects on the levitation characteristics caused when the volume of the solder of the solder joint portion 40 is shrunk upon solidification.

As mentioned above, the magnetic head assembly 20 in the first example is formed such that the insulating layer 36a of the flexure terminal portion 29 is separated from the surface of the flexure 23. Thus, when the solder of the solder joint portion 40 is solidified, the insulating layer 36 of the flexure terminal portion 29 experiences deformation such as being raised from the surface of the flexure 23, so that the stress generated by the volume shrinkage of the solder is absorbed. In accordance with this, it is possible to prevent the stress from warping the head slider 24 of the slider attachment portion 26 to the flexure tip portion 23b relative to the attachment position via the slider terminal portion 32. As a result, a desired relative angle between the slider attachment portion 26 and the flexure 23 is maintained. Therefore, a desired relative angle between the head slider 24 and the flexure 23 is maintained and good levitation characteristics of the magnetic head assembly 20 are secured. Further, reliability of the magnetic disk apparatus 10 using the magnetic head assembly 20 is secured.

Next, a method of manufacturing the magnetic head assembly in the first example is described.

The method of manufacturing the magnetic head assembly in the first example substantially includes a base plate forming step, a load beam forming step, a flexure forming step, a head slider forming step, and an assembly step. In the following, the assembly step including the flexure forming step and the forming of signal wiring is described. Other steps mentioned above may employ known forming steps.

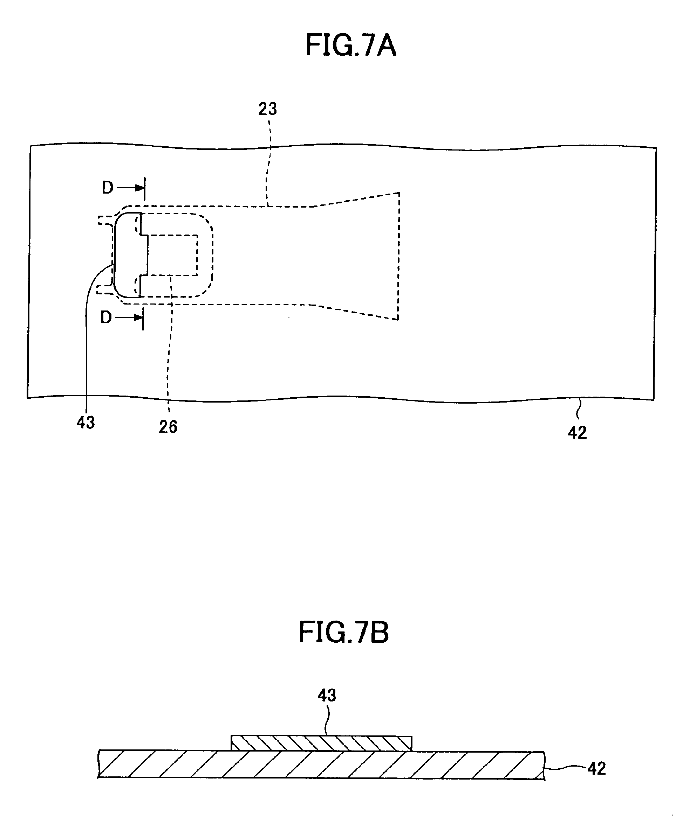

FIGS. 7 to 11 are diagrams showing a portion of the method of manufacturing the magnetic head assembly in the first example. Each A of FIGS. 7 to 11 shows a plan view, and B shows a cross-sectional view taken along line D-D shown in each A. In addition, line D-D shown in each A of FIGS. 7 to 11 indicates the same line as line C-C shown in FIG. 5. In each A of FIGS. 7 to 10, an outline of the flexure obtained as a result and an opening portion (corresponding to the opening portion 23-1 shown in FIG. 5) is shown in broken lines for ease of description. In FIG. 7A to FIG. 10A, although a metallic thin belt extends in the longitudinal direction of each sheet, where a number of flexures are formed, only an area for a single flexure is shown.

First, in steps of FIG. 7, a sacrifice layer 43 including a Cu film (having a film thickness of 100 nm, for example) is selectively formed on a surface of a metallic thin belt 42 including a stainless steel plate, for example. An area where the sacrifice layer 43 is formed includes an area where the flexure terminal portion 29 shown in FIG. 5 is formed and the area is positioned on the flexure tip portion 23b side relative to the flexure tip portion 23b and the attachment position of the head slider 24 on the slider attachment portion 26.

Specifically, the forming of the sacrifice layer 43 includes the steps of forming a resist pattern having an area of an opening for forming the sacrifice layer 43 in advance, accumulating materials for the sacrifice layer on the opening portion in a plating method, a deposition method, or a sputtering method, and removing the resist film and the Cu film disposed thereon at one time by a lift-off method. In addition, the sacrifice layer 43 may be formed on an entire surface of the metallic thin belt 42 in advance and an area other than the sacrifice layer 43 shown in FIG. 7A may be removed by wet etching.

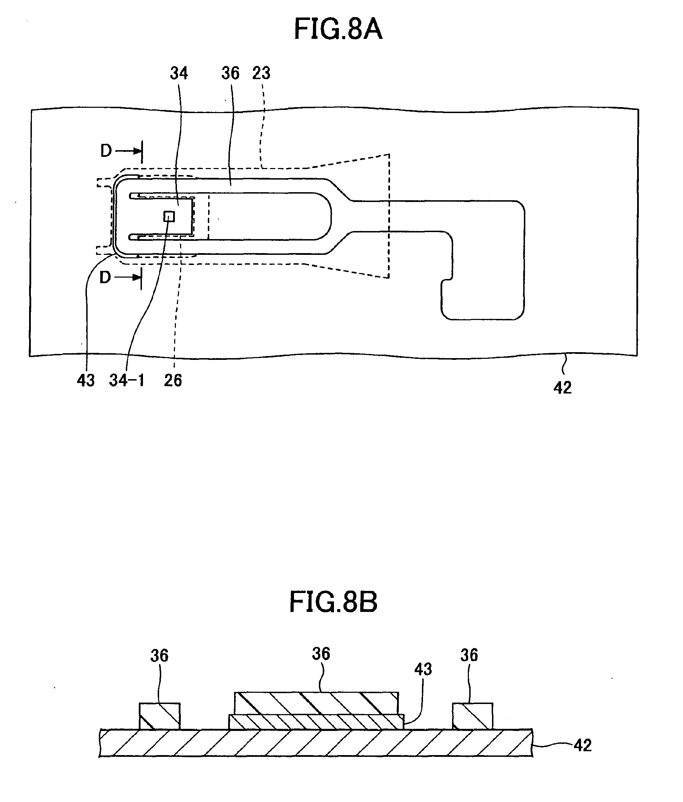

Next, in steps of FIG. 8, an insulating layer 36 including polyimide resin is selectively formed on the surface of the metallic thin belt 42. The insulating layer 36 includes an insulating layer for the signal wiring portion 25 shown in FIG. 4. The insulating layer 36 covers the sacrifice layer 43 and is formed in the longitudinal direction of the flexure 23 formed in the following steps. The insulating layer 36 includes an insulating layer for the flexure terminal portion 29 and the HGA terminal portion 35 shown in FIG. 5. On this occasion, the insulating layer 34 is also formed on a surface of an area to be used as the slider attachment portion and an opening portion 34-1 is formed on a portion thereof.

Specifically, the forming of the insulating layers 34 and 36 includes the steps of coating a polyimide resin solution onto an entire surface of the metallic thin belt 42 and drying the entire surface. Then, the polyimide resin is formed into a predetermined shape by dry etching such as reactive ion etching. The insulating layers 34 and 36 formed in this manner are firmly adhered to the sacrifice layer 43 and the metallic thin belt 42.

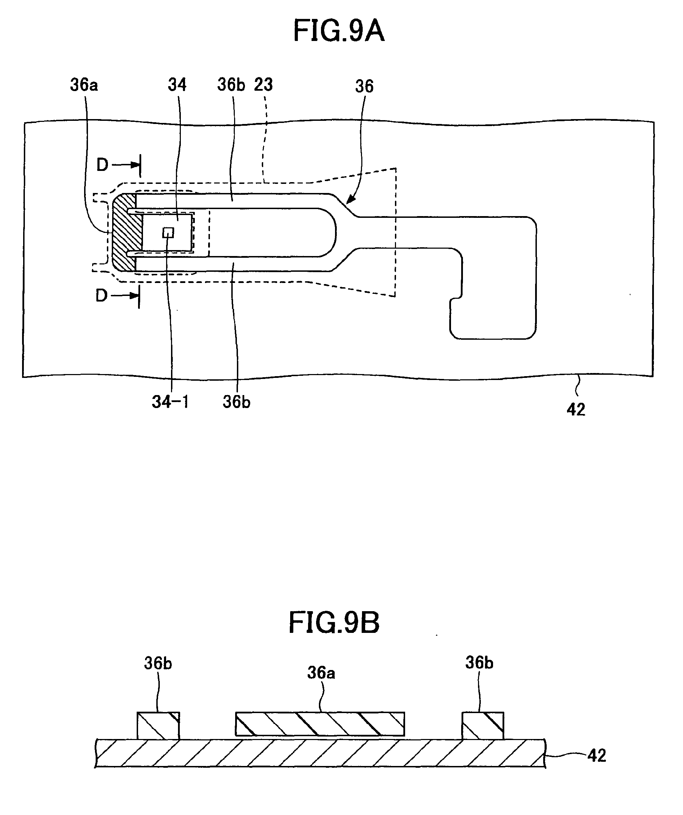

Next, in steps of FIG. 9, the sacrifice layer 43 is removed by wet etching. The removal of the sacrifice layer 43 uses an etchant having properties such that the sacrifice layer 43 is readily soluble and the metallic thin belt 42 is insoluble. Specifically, the removal of the sacrifice layer 43 including the Cu film includes a step of immersing the metallic thin belt 42 shown in FIG. 8 in an ammonium persulfate solution. The ammonium persulfate solution has properties such that the Cu film is soluble and stainless steel is insoluble. Although the surface of the sacrifice layer 43 is covered with the insulating layer 36, the sacrifice layer 43 is eroded from sides thereof and the sacrifice layer 43 beneath the insulating layer 36 is removed. As a result, the insulating layer 36a (shown in a hatching area of slant lines in the drawings) of the area where the sacrifice layer 43 has been formed is separated from the metallic thin belt 42. Further, an insulating layer 36b of the area where the sacrifice layer 43 is not formed remains firmly adhered to the metallic thin belt 42.

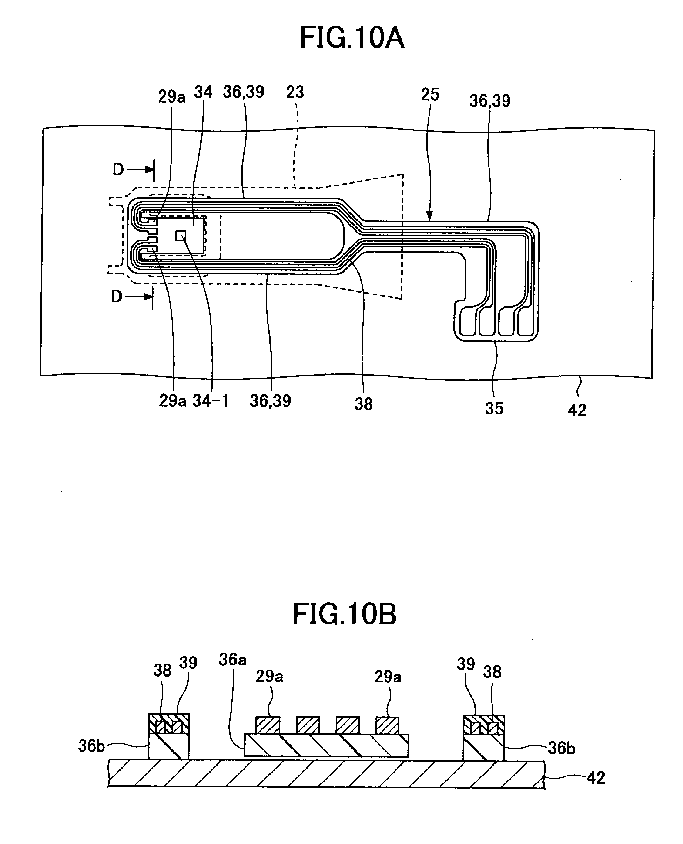

Next, in steps of FIG. 10, the Cu wiring layer 38, the pad electrode 29a of the flexure terminal portion 29, and a pad electrode of the HGA terminal portion 35 are formed. The forming of the conductor wiring may include the forming of a Cu film on an entire surface of the structure in FIG. 9 and use a subtractive method of selectively etching unnecessary portions of the Cu film. Or the forming the conductor wiring may include the forming of a resist film on the entire surface of the structure in FIG. 9, the forming of a pattern for forming a Cu film on the resist film, and an additive method of embedding the Cu film by electroless plating or the like.

The steps of FIG. 10 further include the forming of the protective film 39 including polyimide resin and the like for covering surfaces of the Cu wiring layer 38 and the insulating layer 36. In addition, the Cu film is exposed for the pad electrode 29a of the flexure terminal portion 29 and for the pad electrode of the HGA terminal portion 35.

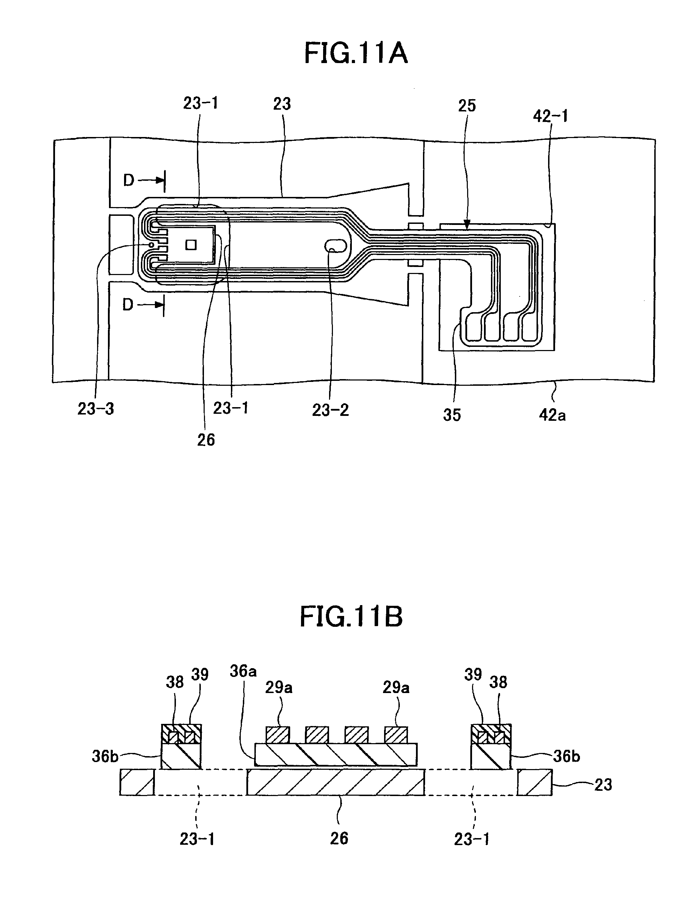

Next, in steps of FIG. 11, the flexure 23 is formed by etching the metallic thin belt 42. In this case, opening portions 23-1 to 23-3 of the flexure 23, the signal wiring portion 25, and an opening portion 42-1 in the vicinity of the signal wiring portion 25 are formed.

Following the steps of FIG. 11, the flexure 23 and the signal wiring portion 25 are detached from the metallic thin belt 42 by a laser cutting method or a pressing method. In this manner, the sheet-like flexure 23 and signal wiring portion 25 are formed.

Next, the following steps will be described with reference to FIG. 11 and FIG. 4 described above. The flexure 23, the load beam 21 formed separately, and the base plate 22 are assembled and integrated. Further, the head slider 24 is bonded to the surface of the slider attachment portion 26 of the flexure 23 using a bond. Specifically, the opening portion 34-1 of the insulating layer is filled with the bond and the head slider 24 is attached to the slider attachment portion 26 by pressure welding.

Next, a solder ball including Sn-Ag-Cu is used and the flexure terminal portion 29 is connected to the slider terminal portion 32 by soldering.

In this manufacturing method, the sacrifice layer 43 is formed such that it includes the area where the flexure terminal on the surface of the metallic thin belt 42 is formed. The insulating layer 36 of the signal wiring portion 25 is formed on the sacrifice layer 43 and then the sacrifice layer 43 is removed. Thus, the insulating layer 36a of the flexure terminal portion 29 is configured to be separate from the surface of the flexure. Further, it is possible to prevent negative effects such as erosion provided to the Cu wiring layer 38 by the etching processing of the sacrifice layer 43.

Next, other example of the method of manufacturing the magnetic head assembly in the first example will be described. Description of steps other than a flexure forming step is omitted, since the steps other than the flexure forming step are the same as in the aforementioned method of manufacturing the magnetic head assembly in the first example. Moreover, plan views for the manufacturing steps are omitted, since the plan views are substantially the same as those shown in FIG. 7A to FIG. 11A. Only cross-sectional views are provided.

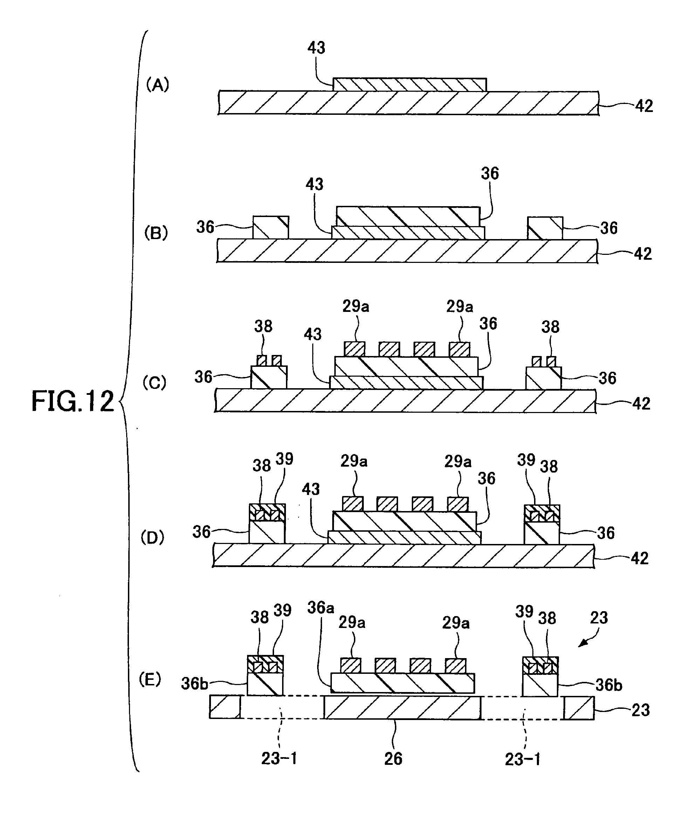

FIG. 12 is a diagram showing other example of steps of manufacturing the magnetic head assembly in the first example.

In the steps of FIG. 12-(A) and (B), the sacrifice layer 43 and the insulating layer 36 are formed in this order in the same manner as in the steps of FIG. 7 and FIG. 8 mentioned above. However, a material having etching selectivity for a Cu film is selected instead of the Cu film. In this case, Cr is used as an example of the sacrifice layer 43.

Next, in steps of FIG. 12-(C), the Cu wiring layer 38, the pad electrode 29a of the flexure terminal portion 29, and the pad electrode of the HGA terminal portion (not shown in the drawings) are formed in the same manner as in the steps of FIG. 10 mentioned above.

Next, in steps of FIG. 12-(D), the protective film 39 including polyimide resin and the like for covering the Cu wiring layer 38 is formed. In addition, the Cu film is exposed for the pad electrode 29a of the flexure terminal portion 29 and for the pad electrode of the HGA terminal portion (not shown in the drawings).

Next, in steps of FIG. 12-(E), the sacrifice layer 43 is removed by wet etching. The removal of the sacrifice layer 43 uses an etchant having properties such that the sacrifice layer 43 is soluble and the Cu wiring layer 38 and the metallic thin belt 42 are insoluble. Specifically, in the removal of the Cr film of the sacrifice layer 43, the metallic thin belt 42 shown in FIG. 12-(D) is immersed in a potassium ferricyanide solution. The potassium ferricyanide solution has properties such that the Cr film is soluble and a Cu film is insoluble. In accordance with this, it is possible to solve only the sacrifice layer 43. As the potassium ferricyanide solution affects a Cr component included in stainless steel of the metallic thin belt 42, it is preferable to form the Cr film of the sacrifice layer 43 to be sufficiently thin, namely, 50 nm, for example and have a short etching time (immersion time). Further, only the surface or the area where the sacrifice layer 43 of the metallic thin belt 42 is formed may be brought into contact with the etchant. In accordance with this step, the insulating layer 36a in the area where the sacrifice layer 43 is formed is separated from the metallic thin belt 42 and the insulating layer 36b in other area remains firmly adhered to the metallic thin belt 42.

In steps of FIG. 12-(E), the area of metallic thin belt 42 shown in FIG. 11 above is further etched so as to form the flexure 23. The steps after the etching are the same as those described above.

In this manufacturing method, the sacrifice layer 43 is formed such that it includes the area where the flexure terminal portion on the surface of the metallic thin belt 42 is formed, the insulating layer 36 of the signal wiring portion 25 is formed on the sacrifice layer, the Cu wiring layer 38 and the like is formed, and then the sacrifice layer 43 is removed. Thus, the insulating layer 36a of the flexure terminal portion 29 is configured to be separate from the surface of the flexure. Further, it is possible to prevent negative effects such as erosion provided to the Cu wiring layer 38 by the etching processing of the sacrifice layer 43.

Moreover, in this manufacturing method, the sacrifice layer 43 is removed after the protective film 39 of the signal wiring portion 25 is formed. Thus, when forming the pad electrode 29a of the flexure terminal portion 29 and the Cu wiring layer 38 connecting to the pad electrode 29a, the forming can be performed while the insulating layer 36a is fixed on the metallic thin belt 42 via the sacrifice layer 43. Therefore, when forming the pad electrode 29a of the flexure terminal portion 29 and the Cu wiring layer 38, positioning accuracy thereof is improved.

In the aforementioned manufacturing method, the step of removing the sacrifice layer 43 may be performed before the step of forming the protective film 39.

Next, description is given regarding an example of the magnetic disk apparatus 10 according to the first embodiment shown in FIG. 3 including a magnetic head assembly of a second example.

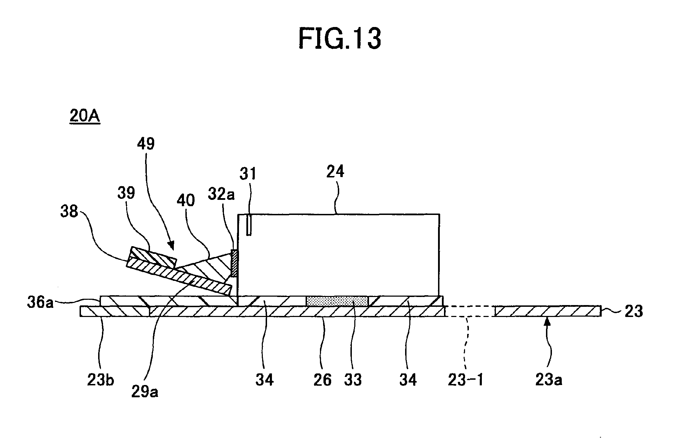

FIG. 13 is a cross-sectional view of the magnetic head assembly in second example. In the drawing, the same numerals are assigned to portions corresponding to those described above and description thereof is omitted. The magnetic head assembly in the second example is the same as the magnetic head assembly 20 in the first example shown in FIGS. 4 to 6 except a separation structure of the flexure terminal portion relative to the flexure, so that description will be given with reference to FIG. 13 along with FIGS. 3 to 5. In addition, FIG. 13 emphatically shows deformation of the flexure terminal portion resulting from the volume shrinkage of a solder joint portion.

In a magnetic head assembly 20A in the second example, the insulating layer 36 of the flexure terminal portion 29 is firmly adhered to the surface of the flexure 23 and the pad electrode 29a of the flexure terminal portion 29 and the Cu wiring layer 38 connected thereto are disposed separately from the insulating layer 36. Further, the protective film 39 is disposed on the surface of the Cu wiring layer 38.

In the solder joint portion 40, the flexure terminal portion 29 is electrically connected to the slider terminal portion 32 using solder. Since the volume of solder of the solder joint portion 40 is shrunk upon solidification, stress is generated such that the slider terminal portion 32 and the flexure terminal portion 29 are brought close to each other. In this case, the pad electrode 29a of the flexure terminal portion 29 and the Cu wiring layer 38 are raised and absorbs the stress since they are separate from the insulating layer 36. In accordance with this, it is possible to prevent the slider attachment portion 26 from being raised from the flexure body portion 23a and a desired relative angle between the slider attachment portion 26 and the flexure body portion 23a is maintained. Thus, good levitation characteristics of the head slider 24 are maintained. Further, it is possible to prevent the deterioration of the performance and reliability of the magnetic disk apparatus 10 using the magnetic head assembly 20A. In addition, the protective film 39 may be formed on the entire surface of the Cu wiring layer 38 in the flexure terminal portion 29.

Next, description will be given regarding other example of the method of manufacturing the magnetic head assembly in the second example. Description of steps other than a flexure forming step is omitted, since the steps other than the flexure forming step are the same as in the aforementioned method of manufacturing the magnetic head assembly in the first example.

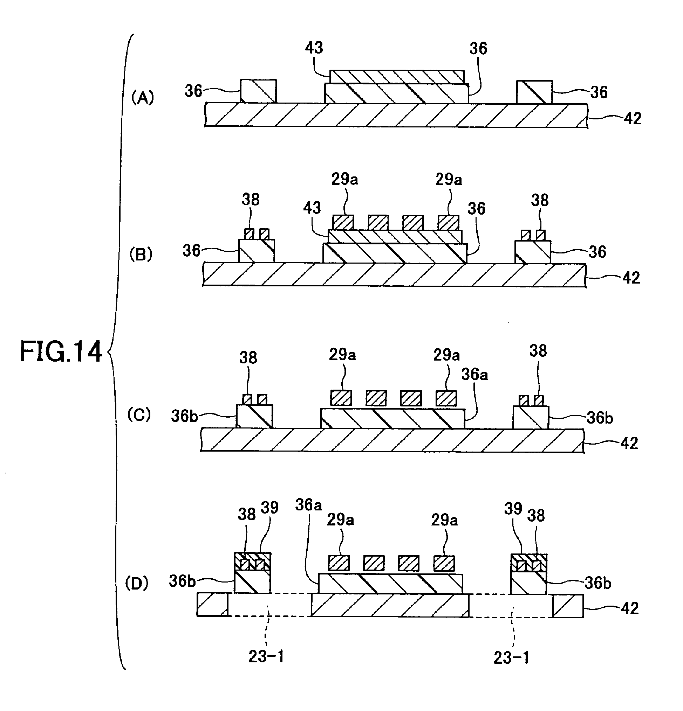

FIG. 14 is a diagram showing steps of manufacturing the magnetic head assembly in the second example using cross-sectional views.

In steps of FIG. 14-(A), the insulating layer 36 including polyimide resin is selectively formed on the surface of the metallic thin belt 42. The insulating layer 36 is formed in the same range of the insulating layer 36 shown in FIG. 8A including the flexure terminal portion 29 and the HGA terminal portion (not shown in the drawings). The method of forming the insulating layer 36 is performed in the same method as mentioned above.

In steps of FIG. 14-(A), the sacrifice layer 43 is formed on the insulating layer 36 of the flexure terminal portion 29. The sacrifice layer 43 may include materials as long as wet etching is selectively possible on the Cu film of the Cu wiring layer formed in the following steps. In this case, a Cr film is used.

Next, in steps of FIG. 14-(B), the Cu wiring layer 38, the pad electrode 29a of the flexure terminal portion 29, and the pad electrode of the HGA terminal portion (not shown in the drawings) are formed on the sacrifice layer 43 and the insulating layer 36 using the same method as in the steps of FIG 10.

Next, in steps of FIG. 14-(C), the sacrifice layer 43 is removed by wet etching. The removal of the Cr film of the sacrifice layer 43 is performed in the same method as in the steps of FIG. 12-(E). In accordance with this, the pad electrode 29a of the flexure terminal portion 29 and the Cu wiring layer 38 are separated from the insulating layer 36a.

Next, in steps of FIG. 14-(D), the protective film 39 including polyimide resin and the like for covering the Cu wiring layer 38 is formed. In addition, the Cu film is exposed for the pad electrode 29a of the flexure terminal portion 29 and for the pad electrode of the HGA terminal portion. In accidence with this, the flexure 23 is formed and the following steps are the same steps as mentioned above.

In this manufacturing method, the pad electrode 29a of the flexure terminal portion 29 and the Cu wiring layer 38 are configured to be separate from the insulating layer 36a. Also, in this manufacturing method, the sacrifice layer 43 is removed after the signal wiring portion 25 is formed. Thus, when forming the pad electrode 29a of the flexure terminal portion 29 and the Cu wiring layer 38, the forming can be performed while the insulating layer 36 is firmly adhered to the metallic thin belt 42. Therefore, when forming the pad electrode 29a of the flexure terminal portion 29 and the Cu wiring layer 38, positioning accuracy thereof is improved.

### [Second embodiment]

A magnetic disk apparatus according to a second embodiment of the present invention concerns a magnetic disk apparatus including a lamp-type loading/unloading mechanism.

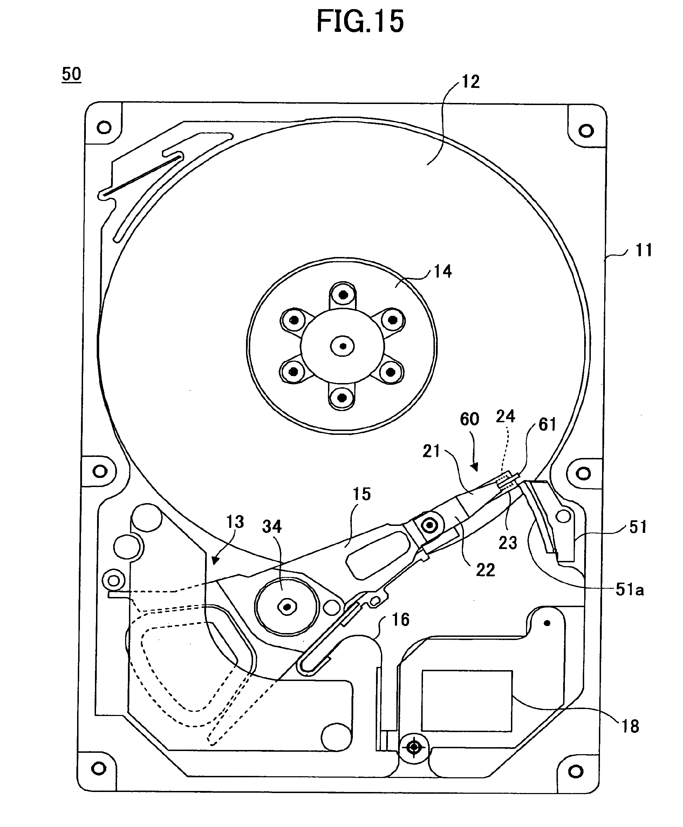

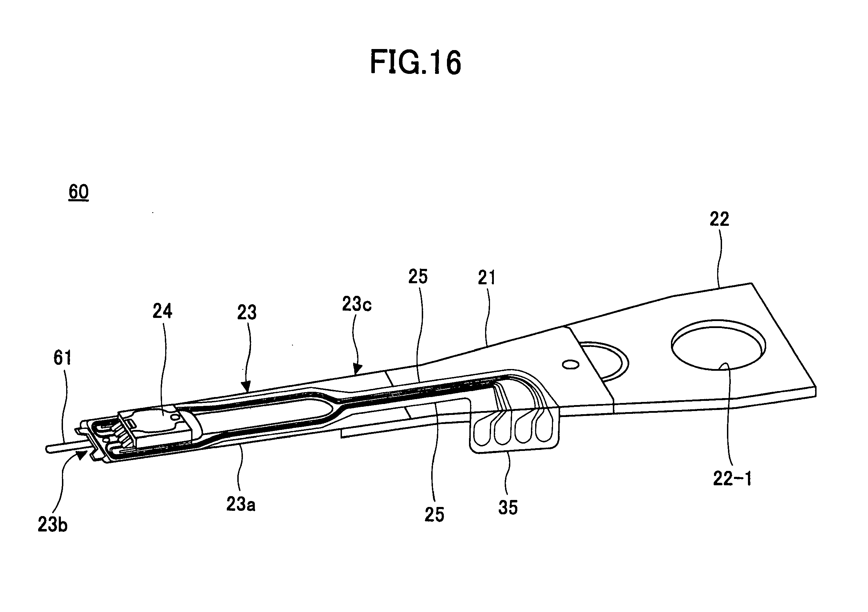

FIG. 15 is a plan view of main elements of the magnetic disk apparatus according to the second embodiment of the present invention. FIG. 16 is a perspective view of the magnetic head assembly in a third example when viewed from a surface side facing a medium. In the drawing, the same numerals are assigned to portions corresponding to those described above and description thereof is omitted.

With reference to FIGS. 15 and 16, a magnetic disk apparatus 50 according to the second embodiment is constituted substantially in the same manner as in the magnetic disk apparatus 10 according to the first embodiment shown in FIG. 3 except a lamp 51 provided in a housing 11 and a different magnetic head assembly 60.

In the magnetic head assembly 60 in the third example, a lift tab 61 is disposed at the tip portion 23b thereof and the base of the lift tab 61 is supported by the load beam 21. In addition, the lift tab 61 is not directly connected to a flexure 63.

The lamp 51 is disposed on the outside of the magnetic disk 12. The lamp 51 includes resin, for example. A slope-like lift tab sliding portion 51a is formed such that it extends in the periphery of the magnetic disk 12 and comes away from a surface of the magnetic disk 12 in the vertical direction from the magnetic disk 12 side to the outer side thereof.

The magnetic head assembly 60 is unloaded such that the head slider 24 in a levitation status is forcedly separated from the magnetic disk 12 when the lift tab 61 is entrained in the lift tab sliding portion 51a of the lamp 51 upon withdrawing to an outer area of the magnetic disk 12. Also, when the magnetic head assembly 60 is loaded from an unloaded status, the lift tab 61 is slid down the lift tab sliding portion 51a, whereby the head slider 24 is loaded on the magnetic disk 12.

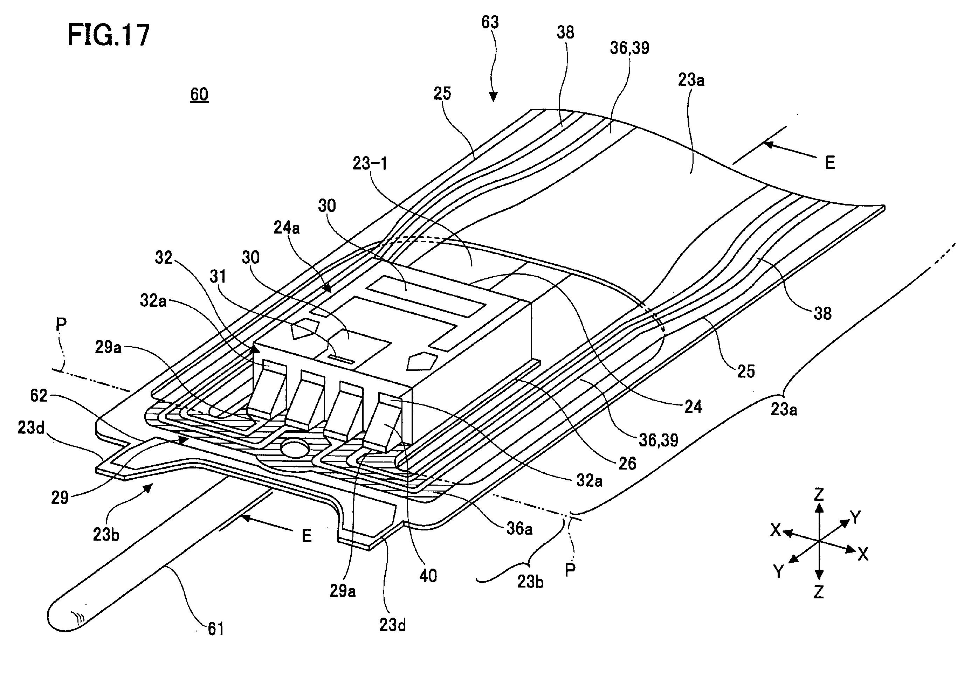

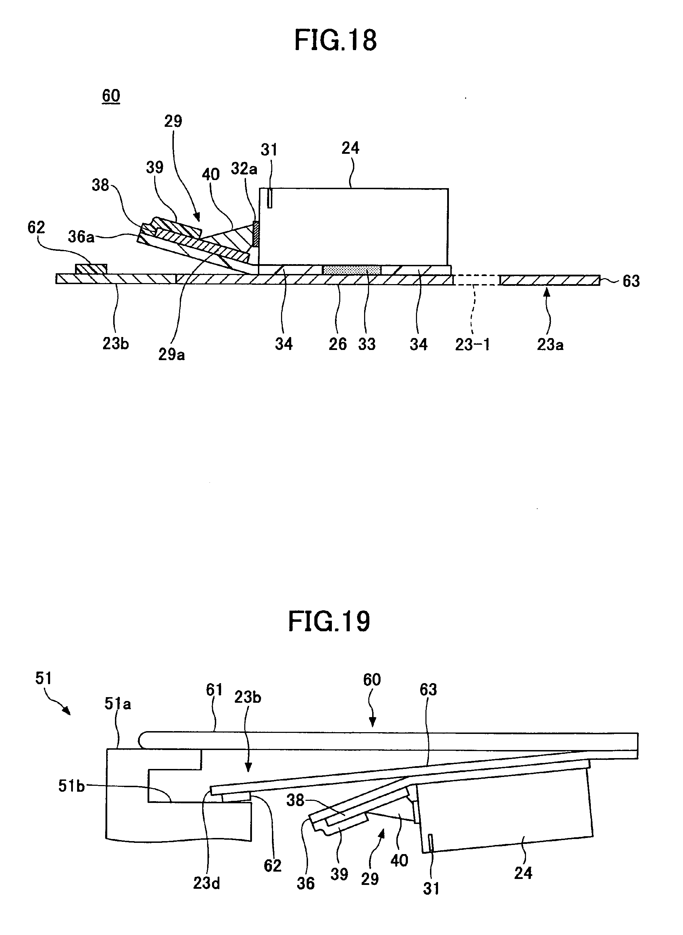

FIG. 17 is an enlarged view of main elements of the magnetic head assembly in a third example, showing the vicinity of the head slider of the tip portion of the magnetic head assembly. FIG. 18 is a cross-sectional view taken along line E-E shown in FIG. 17.

With reference to FIGS. 17 and 18, the magnetic head assembly 60 includes a protective film 62 disposed on the surface of the head slider 24 side of the flexure tip portion 23b. The flexure 63 of the magnetic head assembly 60 has substantially the same structure as that of the flexure 23 of the magnetic head assembly 20 in the first example as shown in FIGS. 5 and 6.

The protective film 62 is formed on the surface of the flexure tip portion 23b substantially along an outline of a protrusion 23d. The protective film 62 has a film thickness of 5 µm, for example. Materials of the protective film 62 are selected from the same resin materials as in the insulating layer 36, namely, polyimide resin, for example.

The protective film 62 is formed separately from the insulating layer 36a of the flexure tip portion 23b. On the other hand, the insulating layer 36a of the flexure terminal portion 29 is separated from the surface of the flexure 63. This structure is the same as that of the flexure of the magnetic head assembly in the first example. Thus, the insulating layer 36a is separated from the protective film 62, so that the flexure terminal portion 29 is capable of absorbing stress in the same manner as in the magnetic head assembly in the first example when the volume of the solder of the solder joint portion 40 is shrunk.

FIG. 19 is a diagram showing how the magnetic head assembly in the third example is brought into contact with the lamp in a substantial side elevational view.

With reference to FIG. 19, the lamp 51 includes the aforementioned lift tab sliding portion 51a and a flexure entraining portion 51b for entraining the protrusion 23d of the flexure tip portion 23b. When the magnetic head assembly 60 is in the unloaded status (withdrawn status), the lift tab 61 is brought into contact with the lift tab sliding portion 51a of the lamp 51 and the head slider 24 is separated from the magnetic disk not shown in the drawing. In this status, the flexure 63 is hung downward due to the weight of the head slider 24 and likely to be oscillated in the upward and downward directions by external oscillation and the like. Thus, problems such as damage to the flexure 63, contamination of the head slider 24 through contact with other member, and the like are likely to be caused. However, the protrusion 23d of the flexure tip portion 23b is entrained in the flexure entraining portion 51b, so that such problems are not caused.

Further, the flexure is in contact with the flexure entraining portion 51b via the protective film 62. Thus, direct contact between the metallic protrusion 23d and the resin flexure entraining portion 51b is prevented and the generation of dust through the abrasion of the flexure entraining portion 51b can be prevented.

As mentioned above, the magnetic head assembly 60 in the third example includes the lift tab 61 and the protective film 62 is formed on the surface of the flexure 63 of the flexure tip portion 23b. Thus, the flexure tip portion 23b is brought into contact with the flexure entraining portion 51b of the lamp 51 via the protective film 62, so that the generation of dust can be prevented. Further, the protective film 62 is separated from the insulating layer 36a of the flexure terminal portion 29, so that it is also possible to prevent the warping of the slider attachment portion 26 resulting from stress generated when the volume of the solder of the solder joint portion 40 is shrunk upon solidification.

In addition, the method of manufacturing the magnetic head assembly 60 in the third example is substantially the same as that of the aforementioned magnetic head assembly 60 in the first example, so that description thereof is omitted. However, it is preferable to form the protective film 62 in the same steps as those of the insulating layer 36 in terms of simplification.

Next, description is given regarding an example of the magnetic disk apparatus according to the second embodiment including a magnetic head assembly in a fourth example. The magnetic disk apparatus has the same structure as that of the magnetic head apparatus shown in FIG. 15 except the magnetic head assembly. The magnetic head assembly in the fourth example is a variation of the magnetic head assembly in the third example.

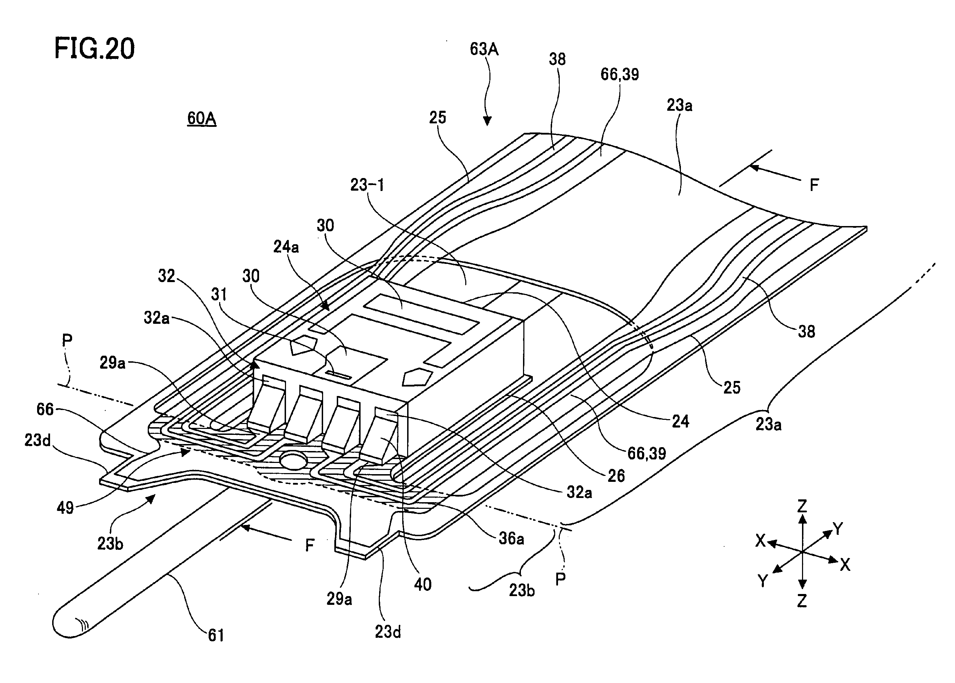

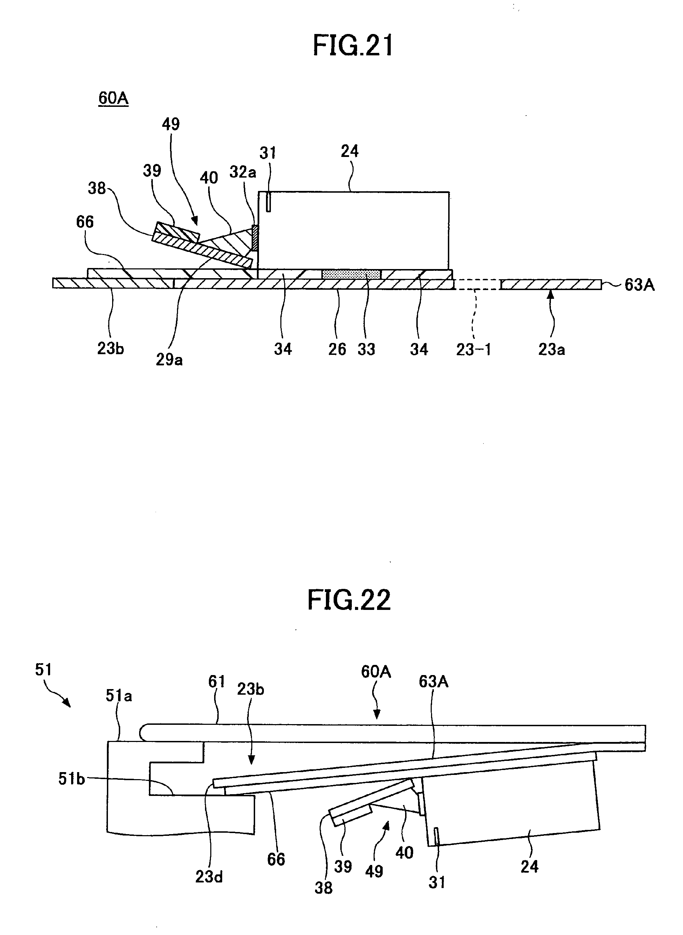

FIG. 20 is an enlarged view of main elements of the magnetic head assembly in the fourth example. FIG. 21 is a cross-sectional view taken along line F-F shown in FIG. 20. And FIG. 22 is a diagram showing how the magnetic head assembly in the fourth example is brought into contact with a lamp. In the drawings, the same numerals are assigned to portions corresponding to those described above and description thereof is omitted.

With reference to FIGS. 20 to 22 along with FIG. 15, in a magnetic head assembly 60A in the fourth example, an insulating layer 66 of the signal wiring portion 25 is formed continuously to the protrusion 23d of the flexure tip portion 23b on a surface of a flexure 63A. In other words, the insulating layer 66 corresponds to the insulating layer 36 and the protective film 62 in the magnetic head assembly 60 in the third example shown in FIG. 17, the insulating layer 36 and the protective film 62 being continuously formed without separation. Moreover, the insulating layer 66 is firmly adhered to the surface of the flexure 63A and formed thereon in the flexure terminal portion 49 and the flexure tip portion 23b. In the signal wiring portion 25, the protective film 39 for covering the Cu wiring layer 38 on the insulating layer 66 is formed. Although the protective film 39 is not formed on an area of the flexure tip portion 23b where the Cu wiring layer 38 is not disposed, the protective film 39 may be formed thereon.

In the magnetic head assembly 60A, the pad electrode 29a and the Cu wiring layer 38 of the flexure terminal portion 49 are disposed separately from the insulating layer 66. This is substantially the same structure as that of the magnetic head assembly 20A in the second example shown in FIG. 13. Thus, when the solder of the solder joint portion 40 is solidified, the magnetic head assembly 60A is deformed such that the pad electrode 29a and the Cu wiring layer 38 of the flexure terminal portion 49 are raised from the insulating layer 66 in the same manner as in the magnetic head assembly in the second example, thereby absorbing the stress generated by the volume shrinkage of the solder.

Further, as shown in FIG. 22, when the magnetic head assembly 60A is in the unloaded status (withdrawn status), the protrusion 23d of the flexure tip portion 23b is brought into contact with the flexure entraining portion 51b via the insulating layer 66, it is possible to prevent the generation of dust resulting from the abrasion of the flexure entraining portion 51b.

As mentioned above, in the magnetic head assembly 60A in the fourth example, the insulating layer 66 of the signal wiring portion 25 is formed continuously to the surface of the protrusion 23d of the flexure tip portion 23b. Thus, the flexure tip portion 23b is brought into contact with the flexure entraining portion 51b of the lamp 51 via the insulating layer 66, so that it is possible to prevent the generation of dust. Further, when the solder of the solder joint portion 40 is solidified, the magnetic head assembly 60A in the fourth example is deformed such that the pad electrode 29a and the Cu wiring layer 38 of the flexure terminal portion 49 are raised from the insulating layer 66, thereby absorbing the stress generated by the volume shrinkage of the solder. Thus, it is also possible to prevent the warping of the slider attachment portion 26 resulting from the stress.

The method of manufacturing the magnetic head assembly 60A in the fourth example is substantially the same as that of the magnetic head assembly 60A in the first example, so that description thereof is omitted. However, the steps of forming the insulating layer 66 are substantially the same as those of the insulating layer 36 of the magnetic head assembly 60 in the first example.

Although the element portion of the magnetic head slider of the magnetic head assembly in the first example to the fourth example is described as having the recording element and the reproduction element, only either one of the recording element and the reproduction element may be included.

The present invention is not limited to the specifically disclosed embodiment, and variations and modifications may be made without departing from the scope of the present invention.

## Claims

1. A magnetic head assembly including:
a head slider having an element portion including a recording element or a reproduction element;
a flexure for supporting the head slider; and
a signal wiring portion disposed on a surface of the flexure, the signal wiring portion transmitting recording current signals or reproduction signals,
the magnetic head assembly being **characterized in that**:
the flexure has a slider attachment portion supported by the flexure on an end portion and capable of warping and a flexure terminal portion disposed on the end portion side relative to an attachment position of the head slider on the slider attachment portion, the flexure terminal portion being electrically connected to the signal wiring portion;
the head slider is fixed on a surface of the slider attachment portion and has a slider terminal portion disposed on a side surface on the end portion side, the slider terminal portion being electrically connected to the element portion;
the slider terminal portion is electrically connected to the flexure terminal portion using a joint portion; and
the flexure terminal portion is disposed separably from the surface of the flexure.

2. The magnetic head assembly according to claim 1, wherein
the flexure terminal portion includes an insulating layer formed on the surface of the flexure, an electrode formed on the insulating layer, and a signal wiring layer extending from the electrode to the signal wiring portion, and
the insulating layer is disposed separably from the surface of the flexure.

3. The magnetic head assembly according to claim 2, wherein
the end portion includes a tip portion of the magnetic head assembly, and
the insulating layer is disposed on an area on a tip portion side relative to the attachment position of the head slider on the slider attachment portion, the insulating layer being separable from the surface of the flexure.

4. The magnetic head assembly according to claim 1, wherein
the flexure terminal portion includes an insulating layer formed on the surface of the flexure, an electrode formed on the insulating layer, and a signal wiring layer extending from the electrode to the signal wiring portion, and
the electrode and the signal wiring layer are disposed separably from the insulating layer.

5. The magnetic head assembly according to claim 4, wherein
the end portion includes a tip portion of the magnetic head assembly, and
the electrode and the signal wiring layer are disposed on an area on a tip portion side relative to the attachment position of the head slider on the slider attachment portion, the electrode and the signal wiring layer being separable from the insulating layer.

6. The magnetic head assembly according to claim 1, wherein
the end portion includes a tip portion of the magnetic head assembly,
the tip portion includes a lift tab extending to the outside of a direction of the tip portion and a tip portion of the flexure includes a protective film for covering the surface on the head slider side, and
the protective film is disposed separately from the flexure terminal portion.

7. The magnetic head assembly according to claim 6, wherein
the flexure terminal portion includes an insulating layer on the surface of the flexure, an electrode formed on the insulating layer, and a signal wiring layer extending from the electrode to the signal wiring portion, and
the insulating layer is disposed separably from the surface of the flexure and separately from the protective film.

8. The magnetic head assembly according to claim 6, wherein
the flexure terminal portion includes an insulating layer formed on the surface of the flexure, an electrode formed on the insulating layer, and a signal wiring layer extending from the electrode to the signal wiring portion, and
the electrode and the signal wiring layer are disposed separably from the insulating layer and the protective film and the insulating layer are continuously formed.

9. A method of manufacturing a magnetic head assembly including: a head slider having an element portion including a recording element or a reproduction element; a flexure including a metallic plate and supporting the head slider; and a signal wiring portion disposed on a surface of the flexure, the signal wiring portion transmitting recording current signals or reproduction signals, the magnetic head assembly being **characterized in that**
the flexure has a slider attachment portion supported by the flexure on an end portion and capable of warping and a flexure terminal portion disposed on the end portion side relative to an attachment position of the head slider on the slider attachment portion, the flexure terminal portion being electrically connected to the signal wiring portion,
the head slider is fixed on a surface of the slider attachment portion and has a slider terminal portion disposed on a side surface on the end portion side, the slider terminal portion being electrically connected to the element portion, and
the slider terminal portion is electrically connected to the flexure terminal portion using a joint portion,
the method being **characterized by** the steps of:
forming an insulating layer on an area where the signal wiring portion on a surface of the metallic plate is formed;
forming a flexure terminal portion and a signal wiring layer on the insulating layer;
forming, between the surface of the metallic plate and the insulation layer or between the insulating layer, the flexure terminal portion, and the signal wiring layer, a sacrifice layer on an area including an area where the flexure terminal portion is formed; and
removing the sacrifice layer after the insulating layer or the signal wiring layer is formed on an upper side of the sacrifice layer.

10. The method of manufacturing a magnetic head assembly according to claim 9, wherein
the step of forming the sacrifice layer is performed before the step of forming the insulating layer and the step of removing the sacrifice layer is performed after the step of forming the insulating layer by etching using an etchant such that the sacrifice layer is soluble and a material of the flexure is insoluble.

11. The method of manufacturing a magnetic head assembly according to claim 9, wherein
the step of forming the sacrifice layer is performed between the step of forming the insulating layer and the step of forming the flexure terminal portion and the signal wiring layer, and
the step of removing the sacrifice layer is performed after the step of forming the signal wiring layer by etching using an etchant such that the sacrifice layer is soluble and a material of the signal wiring layer is insoluble.

12. A magnetic disk apparatus
**characterized by**:
the magnetic head assembly according to claim 1;
an actuator mechanism for supporting the magnetic head assembly; and
a magnetic disk recorded and reproduced by an element portion of the magnetic head assembly.

13. The magnetic disk apparatus according to claim 12, wherein
the magnetic head assembly has the end portion as a tip portion of the magnetic head assembly, the tip portion includes a lift tab extending to the outside of a direction of the tip portion, and a tip portion of the flexure includes a protective film separate from the flexure terminal portion, the protective film covering the surface on the head slider side,
the magnetic head assembly further includes a lamp for withdrawing to be out of a magnetic disk area, and
the lamp has a flexure entraining portion for entraining the tip portion of the flexure when the magnetic head assembly is in a withdrawn status and the flexure entraining portion and the tip portion of the flexure are brought into contact via the protective film.

14. A flexure for supporting a head slider having an element portion including a recording element or a reproduction element, the flexure including a signal wiring portion for transmitting recording current signals or reproduction signals on a surface thereof,
the flexure being **characterized by**:
a slider attachment portion supported on an end portion and capable of warping; and
a flexure terminal portion disposed on the end portion side relative to an attachment position of the head slider on the slider attachment portion, the flexure terminal portion being electrically connected to the signal wiring portion, wherein
the flexure terminal portion is disposed separably from a surface of the flexure.

15. The flexure according to claim 14, wherein
the flexure terminal portion includes an insulating layer formed on the surface of the flexure, an electrode formed on the insulating layer, and a signal wiring layer extending from the electrode to the signal wiring portion, and
the insulating layer is disposed separably from the surface of the flexure.

16. The flexure according to claim 15, wherein
the insulating layer is disposed separably from the surface of the flexure in an area on the end portion side relative to the attachment position of the head slider on the slider attachment portion.

17. The flexure according to claim 14, wherein
the flexure terminal portion includes an insulating layer formed on the surface of the flexure, an electrode formed on the insulating layer, and a signal wiring layer extending from the electrode to the signal wiring portion, and
the electrode and the signal wiring layer are disposed separably from the insulating layer.

18. The flexure according to claim 17, wherein
the electrode and the signal wiring layer are disposed separably from the insulating layer in an area on the end portion side relative to the attachment position of the head slider on the slider attachment portion.

19. A method of manufacturing a flexure including a metallic plate, supporting a head slider having an element portion including a recording element or a reproduction element, and having a signal wiring portion for transmitting recording current signals or reproduction signals on a surface thereof,
the method being **characterized by** the steps of:
forming an insulating layer on an area where the signal wiring portion on a surface of the metallic plate is formed;
forming a flexure terminal portion and a signal wiring layer on the insulating layer;
forming, between the surface of the metallic plate and the insulation layer or between the insulating layer, the flexure terminal portion, and the signal wiring layer, a sacrifice layer on an area including an area where the flexure terminal portion is formed; and
removing the sacrifice layer after the insulating layer or the signal wiring layer is formed on the sacrifice layer.
